(19) Europäisches Patentamt
European Patent Office
Office européen des brevets

(11) **EP 4 390 880 B1**

(12) **FASCICULE DE BREVET EUROPEEN**

(45) Date de publication et mention
de la délivrance du brevet:
**01.07.2026 Bulletin 2026/27**

(21) Numéro de dépôt: **23212861.1**

(22) Date de dépôt: **29.11.2023**

(51) Classification Internationale des Brevets (IPC):
*G06V 40/13* *(2022.01)*

(52) Classification Coopérative des Brevets (CPC):
**G06V 40/1306**

(54) **CARTE À CAPTEUR BIOMÉTRIQUE**

BIOMETRISCHE SENSORKARTE

CARD WITH BIOMETRIC SENSOR

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **20.12.2022 FR 2213986**

(43) Date de publication de la demande:
**26.06.2024 Bulletin 2024/26**

(73) Titulaire: **IDEMIA France
92400 Courbevoie (FR)**

(72) Inventeurs:
• SIRIEIX, Laurent
92400 COURBEVOIE (FR)
• DEPRUN, Jean-François
92400 COURBEVOIE (FR)

(74) Mandataire: **Idemia
Service IP / IST
2, place Samuel de Champlain
92400 Courbevoie (FR)**

(56) Documents cités:
**US-A1- 2006 119 369     US-A1- 2018 300 521
US-B2- 8 787 631**

## Description

L'invention concerne une carte à capteur biométrique.

Elle concerne plus particulièrement une carte à capteur biométrique dans laquelle un revêtement est déposé au moins sur le capteur.

L'invention s'applique, notamment, à des domaines techniques tels qu'une carte de paiement ou toute carte d'accès sécurisé.

Une carte à capteur biométrique comporte typiquement un corps et un capteur d'empreinte digitale encarté dans le corps.

Pour cela, le corps est usiné afin de former une cavité dans laquelle le capteur est ensuite disposé.

Pour de nombreuses raisons, il peut être intéressant qu'au moins une partie du capteur soit revêtue.

Par exemple, un capteur présente généralement une surface apparente de couleur noire. En revanche, le corps de la carte, dit inlay, est blanc. Il en résulte qu'un jour visible peut apparaitre entre un contour du capteur et un pourtour de la cavité. Or, un tel jour est peu esthétique. De plus, ce jour peut exposer le contour du capteur d'empreinte digitale à une possible agression extérieure, ce qui peut par exemple entrainer un arrachement ou bien une dégradation du capteur.

Selon un autre exemple, il est intéressant de pouvoir produire une carte d'aspect unifié, dans laquelle le capteur se confond avec une surface du corps de carte.

Selon encore un autre exemple, il peut aussi être intéressant de faciliter une identification d'un emplacement du capteur pour un utilisateur. En effet, le capteur d'empreinte digitale présente généralement une surface externe lisse mais il peut être utile que le capteur puisse être identifier au toucher par l'utilisateur.

Néanmoins, il est souhaitable de ne pas dégrader ou altérer une qualité d'image acquise (i.e. une empreinte d'un doigt d'un utilisateur) par le capteur lorsque celui-ci est revêtu au moins en partie.

En effet, une altération, ou dégradation, de l'image acquise par le capteur a un impact direct sur un taux de fausses acceptations (False Acceptance Ratio : FAR) et un taux de faux rejets (False Reject Ratio : FRR), ce qui empêche alors une reconnaissance efficace du doigt.

US8787631B2 divulgue un capteur capacitif comprenant une pluralité d'électrodes dont chacune émet un signal électrique correspondant à une capacitance déterminée par une distance entre une surface du capteur capacitif et un conducteur électrique. La pluralité d'électrodes comprend des électrodes présentant une première capacitance parasite et des électrodes présentant une seconde capacitance parasite différente de la première capacitance parasite, et elles sont disposées selon un motif prescrit différent d'un motif d'informations biométriques d'une partie du corps à lire par le capteur capacitif.

US2006/119369A1 divulgue un capteur de détection de capacité électrostatique qui inclut des premières électrodes qui s'étendent à partir de lignes de câblage en colonnes, des deuxièmes électrodes qui s'étendent à partir de lignes de câblage en rangées et sont formées sur une couche différente de celle des premières électrodes, une troisième électrode qui est électriquement indépendante de la première électrode et de la seconde électrode par un film isolant, une première région de capacité électrostatique C1 formée entre les premières électrodes et la troisième électrode, et une seconde région de capacité électrostatique C2 formée entre les deuxièmes électrodes et la troisième électrode.

US2018/300521A1 divulgue un dispositif de détection d'empreintes digitales comprenant une pluralité d'éléments de détection d'empreintes digitales, et chaque élément de détection d'empreintes digitales comprend : une électrode de détection pour former une capacitance de détection à partir d'une relation avec un sujet ; un amplificateur ayant une première borne d'entrée connectée à l'électrode de détection et une seconde borne d'entrée dans laquelle un signal de polarisation, dont le potentiel est changé d'un niveau haut à un niveau bas ou du niveau bas au niveau haut pendant une opération de détection d'empreintes digitales, est injecté ; et un contrôleur de gain comprenant une pluralité de sous-capacités de rétroaction, le contrôleur de gain étant connecté sélectivement entre la première borne d'entrée et une borne de sortie de l'amplificateur.

La présente invention vise à pallier au moins en partie ces inconvénients, menant éventuellement à d'autres avantages.

A cet effet, est proposé, selon un premier aspect, une carte à capteur biométrique comportant un corps et un capteur capacitif d'empreinte digitale encarté dans ledit corps, ledit capteur capacitif étant configuré pour acquérir une empreinte digitale d'un doigt d'un utilisateur de ladite carte, ledit capteur capacitif comportant un film sensible et un film diélectrique, ledit film diélectrique recouvrant le film sensible et définissant une surface externe dudit capteur capacitif, ledit film sensible étant configuré pour former un condensateur avec le doigt de l'utilisateur, ladite carte étant caractérisée en ce qu'elle comporte un revêtement recouvrant au moins la surface externe du capteur capacitif, ledit revêtement comportant au moins une première partie en un premier matériau d'une première valeur diélectrique et ayant une première épaisseur, ledit film sensible recouvert de ladite au moins une première partie étant configuré pour former un condensateur d'une première capacitance avec le doigt de l'utilisateur appliqué sur cette au moins une première partie, ledit revêtement comportant au moins une deuxième partie en un deuxième matériau d'une deuxième valeur diélectrique et ayant une deuxième épaisseur, ledit film sensible recouvert de ladite au moins une deuxième partie étant configuré pour former un condensateur d'une deuxième capacitance avec le doigt de l'utilisateur appliqué sur cette au moins une deuxième partie, ladite deuxième capacitance ayant une valeur comprise entre 0,9 et 1,1 fois celle de la première capacitance.

Un tel revêtement permet de limiter une altération ou dégradation de la qualité de l'empreinte digitale acquise par le capteur capacitif par rapport au capteur sans revêtement.

En effet, avec un tel revêtement, la capacitance perçue par le capteur est homogénéisée, ce qui limite un impact du revêtement sur la prise d'empreinte par le capteur.

Le dépôt d'un tel revêtement au moins sur la surface externe du capteur capacitif permet aussi de protéger le capteur capacitif.

Le dépôt d'un tel revêtement au moins sur la surface externe du capteur capacitif permet de modifier l'aspect tactile de la surface externe du capteur capacitif.

Le dépôt d'un tel revêtement au moins sur la surface externe du capteur capacitif permet d'obtenir une hétérogénéité de surface entre l'au moins une première partie et de l'au moins une deuxième partie.

Par exemple, le revêtement est déposé sur la surface externe du capteur capacitif et au moins partiellement sur le corps de la carte, notamment sur un pourtour d'une cavité de la carte accueillant le capteur capacitif.

Un tel revêtement permet d'atténuer visuellement une démarcation visuelle entre le capteur capacitif et le corps de la carte, et notamment de combler ou de masquer un jour entre le capteur et le corps de la carte. Un tel revêtement permet aussi de protéger le contour du capteur des agressions extérieures.

Par exemple, le revêtement est déposé sur l'entièreté de la surface externe du capteur capacitif et du corps de la carte. Un tel revêtement permet de masquer entièrement le capteur capacitif du corps de la carte.

Par exemple, le premier matériau de l'au moins une première partie est une peinture. Par exemple, le matériau de l'au moins une première partie est un vernis, notamment un vernis transparent ou opaque à la lumière, ou encore coloré par des pigments de couleurs.

Par exemple, la première épaisseur de l'au moins une première partie est comprise entre 20 et 120 $\mu$m.

Par exemple, le deuxième matériau de l'au moins une deuxième partie est une peinture.

Par exemple, le deuxième matériau de l'au moins une deuxième partie est un vernis, notamment un vernis transparent ou opaque à la lumière, ou encore coloré par des pigments de couleurs.

Par exemple, la deuxième épaisseur de l'au moins une deuxième partie est comprise entre 20 et 120 $\mu$m.

Dans un mode de réalisation, ladite au moins une première partie forme un premier motif sur la surface externe du capteur capacitif et ladite au moins une deuxième partie forme un deuxième motif sur la surface externe du capteur capacitif.

Le revêtement comporte par exemple une surface externe sur laquelle un utilisateur applique son doigt.

La surface peut être configurée pour avoir un aspect lisse ou rugueux.

Dans un mode de réalisation, l'au moins une première partie et la deuxième partie forment une surface externe rugueuse du revêtement.

Le dépôt d'un tel revêtement au moins sur la surface externe du capteur capacitif permet d'obtenir une surface externe du revêtement présentant un aspect rugueux. L'aspect rugueux d'un tel revêtement permet de faciliter l'identification du capteur capacitif par le toucher.

Dans un mode de réalisation, ledit revêtement comporte au moins une troisième partie déposée sur lesdites au moins une première partie et au moins une deuxième partie, ladite au moins une troisième partie étant en un troisième matériau d'une troisième valeur diélectrique, ladite au moins une troisième partie ayant une troisième épaisseur sur ladite au moins une première partie et une quatrième épaisseur sur ladite au moins une deuxième partie, le film sensible recouvert de l'au moins une troisième partie étant configuré pour former un condensateur ayant une troisième capacitance avec le doigt de l'utilisateur appliqué sur l'au moins une troisième partie revêtant l'au moins une première partie et un condensateur ayant une quatrième capacitance avec le doigt de l'utilisateur appliqué sur l'au moins une troisième partie revêtant l'au moins une deuxième partie, ladite quatrième capacitance ayant une valeur comprise entre 0,9 et 1,1 fois celle de la troisième capacitance.

L'au moins une troisième partie permet de protéger les au moins une première et deuxième parties du revêtement.

Par exemple, le troisième matériau de l'au moins une troisième partie est un vernis, notamment un vernis transparent ou opaque à la lumière, ou encore coloré par des pigments de couleurs.

Par exemple, les troisième et quatrième épaisseurs de l'au moins une troisième partie sont comprises entre 20 et 120 $\mu$m.

Dans un mode de réalisation, dans laquelle la troisième partie forme une surface externe lisse du revêtement.

Dans un mode de réalisation, ledit capteur capacitif comporte au moins une première empreinte creusée dans une épaisseur du film diélectrique dudit capteur, ladite au moins une première empreinte étant configurée pour accueillir au moins partiellement ladite première épaisseur de l'au moins une première partie.

L'au moins une première empreinte creusée dans une épaisseur du film diélectrique du capteur capacitif permet d'accueillir au moins partiellement la première épaisseur de l'au moins une première partie.

L'au moins une première empreinte permet ainsi une diminution de l'épaisseur de l'ensemble formé par le capteur et revêtement au niveau de l'au moins une première partie.

Par exemple, l'au moins une première empreinte est réalisée par retrait de matière directement dans le film diélectrique du capteur capacitif.

Par exemple, l'au moins une première empreinte est réalisé par fraisage.

Par exemple, l'au moins une première empreinte comporte un prolongement dans le corps de la carte.

Dans un mode de réalisation, ledit capteur capacitif comporte au moins une deuxième empreinte creusée dans une épaisseur du film diélectrique dudit capteur, ladite au moins une deuxième empreinte étant configurée pour accueillir au moins partiellement ladite deuxième épaisseur de l'au moins une deuxième partie.

L'au moins une deuxième empreinte creusée dans une épaisseur du film diélectrique du capteur capacitif permet d'accueillir au moins partiellement la deuxième épaisseur de l'au moins une deuxième partie.

L'au moins une deuxième empreinte permet ainsi une diminution de l'épaisseur de l'ensemble formé par le capteur et le revêtement au niveau de l'au moins une deuxième partie.

Par exemple, l'au moins une deuxième empreinte est réalisée par retrait de matière directement dans le film diélectrique du capteur capacitif.

Par exemple, l'au moins une deuxième empreinte est réalisé par fraisage.

Par exemple, l'au moins une deuxième empreinte comporte un prolongement dans le corps de la carte.

Par exemple, la carte à capteur biométrique est une carte bancaire ou une carte de sécurité ou une carte à puce.

L'invention sera bien comprise et ses avantages apparaitront mieux à la lecture de la description détaillée qui suit, donnée à titre indicatif et nullement limitatif, en référence aux dessins annexés dans lesquels :

la figure 1 illustre schématiquement une vue en coupe d'une carte à capteur biométrique selon un premier exemple de réalisation de l'invention ;
la figure 2 illustre une vue partielle en coupe d'un capteur biométrique selon un deuxième exemple de réalisation de l'invention ;
la figure 3 illustre une vue partielle en coupe d'un capteur biométrique selon un troisième exemple de réalisation de l'invention ; et
la figure 4 illustre une vue partielle en coupe d'un capteur biométrique selon un quatrième exemple de réalisation de l'invention.

Les éléments identiques représentés sur les figures précitées sont identifiés par des références numériques identiques.

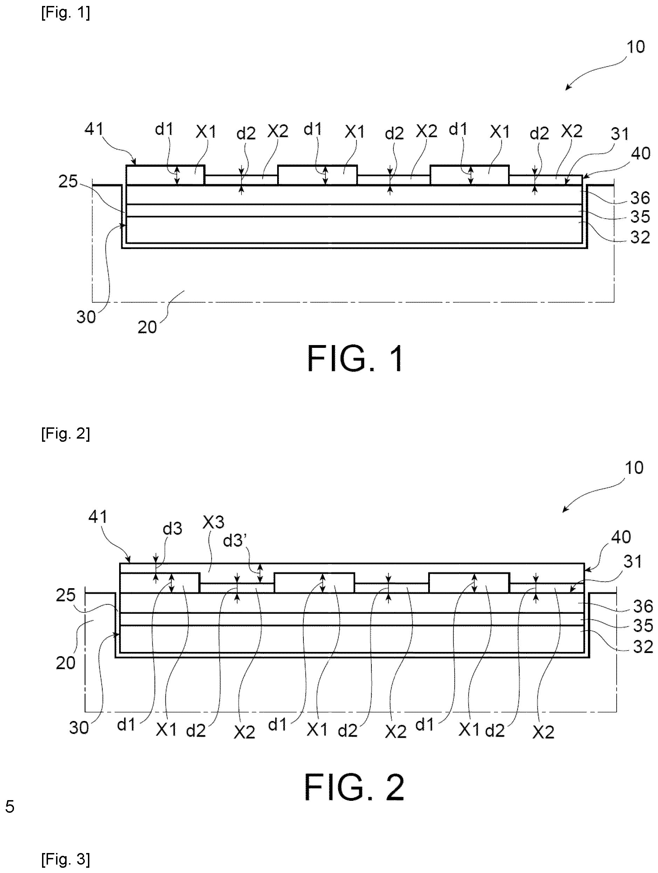

La figure 1 présente une carte à capteur biométrique 10 selon un premier exemple de réalisation de l'invention.

La carte à capteur biométrique 10 comporte un corps 20 et un capteur capacitif 30.

Le corps 20 a typiquement un contour de forme rectangulaire.

Le corps 20 comporte une face supérieure et une face inférieure, généralement parallèles entre elles, et définissant entre elles une épaisseur du corps.

Le corps 20 comporte en outre ici une cavité 25, creusée dans une partie de l'épaisseur du corps à partir de la surface supérieure, et débouchant à la surface supérieure.

La cavité 25 est ici configuré pour accueillir le capteur capacitif 30.

Le capteur capacitif 30 désigne ici un capteur configuré pour acquérir une empreinte digitale d'un doigt d'un utilisateur.

Le capteur capacitif 30 est ici encarté dans le corps 20, c'est-à-dire disposé dans la cavité 25.

Le capteur capacitif 30 comporte ici un film sensible 35 et un film diélectrique 36.

Le film diélectrique 36 recouvre le film sensible 35.

Un film diélectrique désigne ici une couche d'un matériau qui se polarise lorsqu'il est soumis à un champ électrique.

En l'occurrence, le film diélectrique 36 comporte une surface libre qui forme une surface externe 31 du capteur capacitif 30.

Le film diélectrique 36 comporte en outre une surface de contact avec le film sensible. Le film diélectrique 36 a ici une épaisseur d0.

La surface de contact et la surface libre définissent entre elles l'épaisseur d0 du film diélectrique 36.

Le film diélectrique 36 est ici en un matériau diélectrique M0 de constante diélectrique $\varepsilon_c$.

Le film diélectrique 36 permet notamment de protéger le film sensible 35.

Le film sensible 35 est ici configuré pour former un condensateur avec un doigt d'un utilisateur.

Lorsque le doigt d'un utilisateur est en contact sur la surface externe 31 du capteur capacitif 30, le film sensible 35 est configuré pour former un condensateur de capacitance C0.

En d'autres termes, le film sensible 35 et un doigt d'un utilisateur en contact avec la surface externe 31 du capteur capacitif 30 forment ici deux « plaques conductrices » du condensateur.

Ces deux « plaques conductrices » sont ici séparées par un diélectrique, qui comporte au moins le film diélectrique 36.

Une capacitance C du condensateur se calcule par exemple par la relation suivante :

$$C = \frac{(\varepsilon_r * \varepsilon_0 * A)}{d}$$

Avec :

- $\varepsilon_0$ correspondant à la constante diélectrique du vide ;
- A correspondant à une aire d'une surface de contact entre un doigt d'un utilisateur et la surface externe 31 du capteur capacitif 30 ;
- $\varepsilon_r$ correspondant à une constante diélectrique du film diélectrique 36 agencé entre le film sensible 35 et un doigt de l'utilisateur ; et
- d correspondant à une épaisseur du film diélectrique 36 entre le film sensible 35 et le doigt de l'utilisateur en contact sur la surface.

Le capteur capacitif 30 comporte enfin, de manière traditionnelle, une base fonctionnelle 32, le film sensible 35 étant disposé entre la base fonctionnelle 32 et le film diélectrique 36.

La base fonctionnelle 32 désigne ici toute une partie du capteur capacitif 30 comportant des composants électroniques et des pistes électriques configurée pour faire fonctionner le capteur capacitif 30.

Dans cet exemple, la carte à capteur biométrique 10 comporte également un revêtement 40.

Le revêtement 40 est déposé au moins sur la surface externe 31 du capteur capacitif 30.

Le revêtement 40 comporte une surface externe 41.

La surface 41 peut être configurée pour avoir un aspect lisse ou rugueux.

Le revêtement 40 comporte au moins une première partie X1.

La première partie X1 dessine ici un premier motif au moins sur la surface externe 31 du capteur capacitif 30.

L'au moins une première partie X1 est composée ici d'un premier matériau M1 d'une première valeur diélectrique $\varepsilon 1$.

L'au moins une première partie X1 a ici une première épaisseur d1.

Le film sensible 35 recouvert de l'au moins une première partie X1 est configuré pour former un condensateur ayant une première capacitance C1 avec le doigt d'un utilisateur appliqué sur la première partie X1.

La première capacitance C1 est donc ici fonction notamment de la première épaisseur d1 et de la première valeur diélectrique $\varepsilon 1$ de l'au moins une première partie X1.

Le revêtement 40 comporte au moins une deuxième partie X2.

La deuxième partie X2 dessine ici un deuxième motif au moins sur la surface externe 31 du capteur capacitif 30.

L'au moins une deuxième partie X2 est composée ici d'un deuxième matériau M2 d'une deuxième valeur diélectrique $\varepsilon 2$.

L'au moins une deuxième partie X2 a ici une deuxième épaisseur d2.

Le film sensible 35 recouvert de l'au moins une deuxième partie X2 étant configuré pour former un condensateur ayant une deuxième capacitance C2 avec le doigt d'un utilisateur appliqué sur la deuxième partie X2.

La deuxième capacitance C2 est ainsi fonction de la deuxième épaisseur d2 et de la deuxième valeur diélectrique $\varepsilon 2$ de l'au moins une deuxième partie X2.

La deuxième capacitance C2 a ici une valeur au plus proche de celle de la capacitance C1. C'est-à-dire que le rapport entre la deuxième capacitance C2 et la première capacitance C1 a ici une valeur comprise entre 0,9 et 1,1.

En d'autres termes, le rapport entre la première valeur diélectrique $\varepsilon 1$ et la première épaisseur d1 de l'au moins une première partie X1, et le rapport entre la deuxième valeur diélectrique $\varepsilon 2$ et la deuxième épaisseur d2 de l'au moins une deuxième partie X2, tendent à respecter la relation mathématique suivante : $\dfrac{\varepsilon 1}{d1} = \dfrac{\varepsilon 2}{d2}$.

Ceci permet de limiter une dégradation de la qualité de l'empreinte digitale acquise par le capteur capacitif 30.

En l'occurrence, la première épaisseur d1 de l'au moins une première partie X1 et la deuxième épaisseur d2 de l'au moins une deuxième partie X2 sont notamment choisies ici pour que le revêtement 40 présente une surface externe 41 d'aspect rugueuse. La rugosité de la surface externe 41 du revêtement 40 permet ici de faciliter l'identification du capteur par le toucher.

La figure 2 présente un capteur biométrique revêtu selon un deuxième exemple de réalisation de l'invention.

Dans le deuxième exemple décrit, le revêtement 40 diffère en ce qu'il comprend en plus au moins une troisième partie X3.

L'au moins une troisième partie X3 est ici en un troisième matériau M3 de troisième valeur diélectrique $\varepsilon 3$.

L'au moins une troisième partie X3 est ici déposée au moins sur l'au moins une première partie X1 et sur l'au moins une deuxième partie X2.

En d'autres termes, l'au moins une troisième partie X3 recouvre au moins l'au moins une première partie X1 et l'au moins une deuxième partie X2.

L'au moins une troisième partie X3 a ici une troisième épaisseur d3 sur l'au moins une première partie X1.

L'au moins une troisième partie X3 a ici une quatrième épaisseur d3' sur l'au moins une deuxième partie X2.

Le film sensible 35 recouvert de l'au moins une troisième partie X3 et de l'au moins une première partie X1, forme ici un condensateur ayant une troisième capacitance C3 avec le doigt d'un utilisateur appliqué sur l'au moins une troisième partie X3 revêtant l'au moins une première partie X1.

Le film sensible 35 recouvert de l'au moins une troisième partie X3 et de l'au moins une deuxième partie X2, forme ici un condensateur ayant une quatrième capacitance C3' avec le doigt d'un utilisateur appliqué sur l'au moins une troisième partie X3 revêtant l'au moins une deuxième partie X2.

La quatrième capacitance C3' a ici une valeur au plus proche de celle de la troisième capacitance C3. C'est-à-dire que le rapport entre la quatrième capacitance C3' et la troisième capacitance C3 a ici une valeur comprise entre 0,9 et 1,1.

Dans d'autres termes, la troisième épaisseur d3 sur l'au moins une première partie X1 et la quatrième épaisseur d3' sur l'au moins une deuxième partie X2, de l'au moins une troisième partie X3, tendent à respecter la relation mathématique suivante :

$$\varepsilon 1 * d1 + \varepsilon 3 * d3 = \varepsilon 2 * d2 + \varepsilon 3 * d3'.$$

Ainsi, la troisième épaisseur d3 sur l'au moins une première partie X1 et la quatrième épaisseur d3' sur l'au moins une deuxième partie X2, de l'au moins une troisième partie X3, sont choisies en fonction de la valeur diélectrique et de l'épaisseur respectives de l'au moins une première partie X1 et de l'au moins une deuxième partie X2.

Les troisième et quatrième épaisseurs d3 et d3' de l'au moins une troisième partie X3 sont notamment choisies ici pour que le revêtement 40 présente une surface externe 41 d'aspect lisse. En d'autres termes, les épaisseurs des différentes couches X1, X2 et X3 respectent ici la relation suivante :

$$d1 + d3 = d2 + d3'.$$

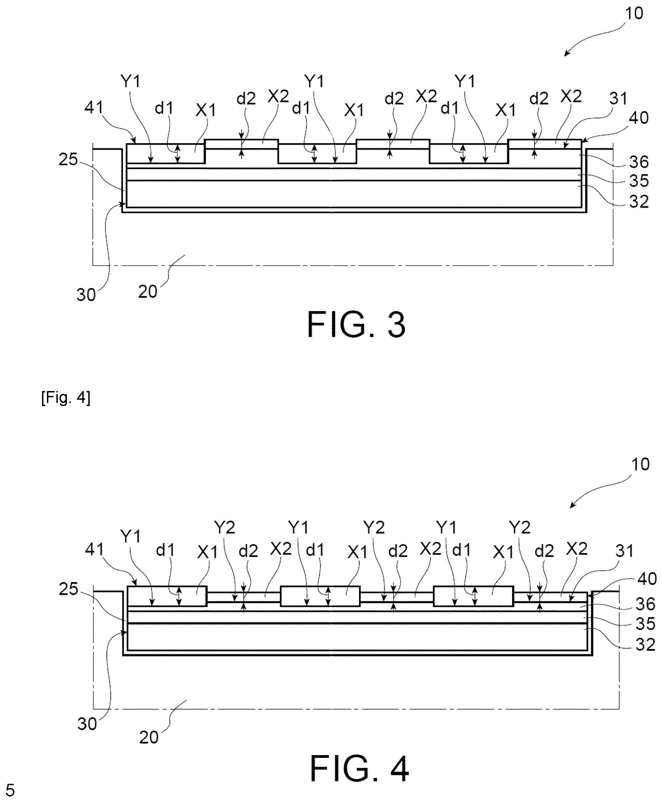

La figure 3 présente un capteur biométrique revêtu selon un troisième exemple de réalisation de l'invention.

Dans le troisième exemple décrit, le capteur capacitif 30 diffère de celui du premier exemple en ce qu'il comporte au moins une première empreinte Y1.

L'au moins une première empreinte Y1 est ici creusée dans une épaisseur du film diélectrique 36 du capteur capacitif 30.

L'au moins une première empreinte Y1 est ici configurée pour accueillir au moins partiellement la première épaisseur d1 de l'au moins une première partie X1.

L'au moins une première empreinte Y1 est notamment réalisée ici par retrait de matière directement dans le film diélectrique 36 du capteur capacitif 30.

En l'occurrence, ce retrait de matière est ici réalisé par fraisage.

La figure 4 présente un capteur biométrique revêtu selon un quatrième exemple de réalisation de l'invention.

Dans le quatrième exemple décrit, le capteur capacitif 30 diffère de celui du troisième exemple en ce qu'il comporte au moins une deuxième empreinte Y2.

L'au moins une deuxième empreinte Y2 est ici creusée dans une épaisseur du film diélectrique 36 du capteur capacitif 30.

L'au moins une deuxième empreinte Y2 est ici configurée pour accueillir au moins partiellement la deuxième épaisseur d2 de l'au moins une deuxième partie X2.

L'au moins une deuxième empreinte Y2 est notamment réalisée ici par retrait de matière directement dans le film diélectrique 36 du capteur capacitif 30.

En l'occurrence, ce retrait de matière est ici réalisé par fraisage.

## Revendications

**1.** Carte à capteur biométrique (10) comportant un corps (20) et un capteur capacitif d'empreinte digitale (30) encarté dans ledit corps (20), ledit capteur capacitif (30) étant configuré pour acquérir une empreinte digitale d'un doigt d'un utilisateur de ladite carte (10), ledit capteur capacitif (30) comportant un film sensible (35) et un film diélectrique (36), ledit film diélectrique (36) recouvrant le film sensible (35) et définissant une surface externe (31) dudit capteur capacitif (30), ledit film sensible (35) étant configuré pour former un condensateur avec le doigt de l'utilisateur, ladite carte (10) étant **caractérisée en ce qu'**elle comporte un revêtement (40) recouvrant au moins la surface externe (31) du capteur capacitif (30), ledit revêtement (40) comportant au moins une première partie (X1) en un premier matériau (M1) d'une première valeur diélectrique ($\varepsilon 1$) et ayant une première épaisseur (d1), ledit film sensible (35) recouvert de ladite au moins une première partie (X1) étant configuré pour former un condensateur d'une première capacitance (C1) avec le doigt de l'utilisateur appliqué sur cette au moins une première partie (X1), ledit revêtement (40) comportant au moins une deuxième partie (X2) en un deuxième matériau (M2) d'une deuxième valeur diélectrique ($\varepsilon 2$) et ayant une deuxième épaisseur (d2), ledit film sensible (35) recouvert de ladite au moins une deuxième partie (X2) étant configuré pour former un condensateur d'une deuxième capacitance (C2) avec le doigt de l'utilisateur appliqué sur cette au moins une deuxième partie (X2), ladite deuxième capacitance (C2) ayant une valeur comprise entre 0,9 et 1,1 fois celle de la première capacitance (C1).

**2.** Carte selon la revendication 1, dans laquelle ladite au moins une première partie (X1) forme un premier motif sur la surface externe (31) du capteur capacitif (30) et ladite au moins une deuxième partie (X2) forme un deuxième motif sur la surface externe (31) du capteur capacitif (30).

**3.** Carte selon les revendications 1 à 2, dans laquelle la première partie (X1) et la deuxième partie (X2) forment une surface externe (41) rugueuse du revêtement (40).

**4.** Carte selon l'une quelconque des revendications 1 à 3, dans laquelle ledit revêtement (40) comporte au moins une troisième partie (X3) déposée sur lesdites au moins une première partie (X1) et au moins une deuxième partie (X2), ladite au moins une troisième partie (X3) étant en un troisième matériau (M3) d'une troisième valeur diélectrique (ε3), ladite au moins une troisième partie (X3) ayant une troisième épaisseur (d3) sur ladite au moins une première partie (X1) et une quatrième épaisseur (d3') sur ladite au moins une deuxième partie (X2), le film sensible (35) recouvert de l'au moins une troisième partie (X3) étant configuré pour former un condensateur ayant une troisième capacitance (C3) avec le doigt de l'utilisateur appliqué sur l'au moins une troisième partie (X3) revêtant l'au moins une première partie (X1) et un condensateur ayant une quatrième capacitance (C3') avec le doigt de l'utilisateur appliqué sur l'au moins une troisième partie (X3) revêtant l'au moins une deuxième partie (X2), ladite quatrième capacitance (C3') ayant une valeur comprise entre 0,9 et 1,1 fois celle de la troisième capacitance (C3).

5. Carte selon la revendication 4, dans laquelle la troisième partie (X3) forme une surface externe (41) lisse du revêtement (40).

6. Carte selon l'une quelconque des revendications 1 à 5, dans laquelle ledit capteur capacitif (30) comporte au moins une première empreinte (Y1) creusée dans une épaisseur du film diélectrique (36) dudit capteur capacitif (30), ladite au moins une première empreinte (Y1) étant configurée pour accueillir au moins partiellement ladite première épaisseur (d1) de l'au moins une première partie (X1).

7. Carte selon l'une quelconque des revendications 1 à 6, dans laquelle ledit capteur capacitif (30) comporte au moins une deuxième empreinte (Y2) creusée dans une épaisseur du film diélectrique (36) dudit capteur capacitif (30), ladite au moins une deuxième empreinte (Y2) étant configurée pour accueillir au moins partiellement ladite deuxième épaisseur (d2) de l'au moins une deuxième partie (X2).

**Patentansprüche**

1. Biometrische Sensorkarte (10), die einen Körper (20) und einen kapazitiven Fingerabdrucksensor (30), der in den Körper (20) eingesetzt ist, aufweist, wobei der kapazitive Sensor (30) dafür ausgelegt ist, einen Fingerabdruck eines Fingers eines Benutzers der Karte (10) zu erfassen, wobei der kapazitive Sensor (30) einen empfindlichen Film (35) und einen dielektrischen Film (36) aufweist, wobei der dielektrische Film (36) den empfindlichen Film (35) bedeckt und eine Außenfläche (31) des kapazitiven Sensors (30) definiert, wobei der empfindliche Film (35) dafür ausgelegt ist, mit dem Finger des Benutzers einen Kondensator zu bilden, wobei die Karte (10) **da-**

**durch gekennzeichnet ist, dass** sie eine Beschichtung (40) aufweist, die mindestens die Außenfläche (31) des kapazitiven Sensors (30) bedeckt, wobei die Beschichtung (40) mindestens einen ersten Teil (X1) aus einem ersten Material (M1) mit einem ersten dielektrischen Wert (ε1) und mit einer ersten Dicke (d1) aufweist, wobei der mit dem mindestens einen ersten Teil (X1) bedeckte empfindliche Film (35) dafür ausgelegt ist, mit dem auf diesen mindestens einen ersten Teil (X1) aufgedrückten Finger des Benutzers einen Kondensator mit einer ersten Kapazität (C1) zu bilden, wobei die Beschichtung (40) mindestens einen zweiten Teil (X2) aus einem zweiten Material (M2) mit einem zweiten dielektrischen Wert (ε2) und mit einer zweiten Dicke (d2) aufweist, wobei der mit dem mindestens einen zweiten Teil (X2) bedeckte empfindliche Film (35) dafür ausgelegt ist, mit dem auf diesen mindestens einen zweiten Teil (X2) aufgedrückten Finger des Benutzers einen Kondensator mit einer zweiten Kapazität (C2) zu bilden, wobei die zweite Kapazität (C2) einen Wert hat, der zwischen dem 0,9- und dem 1,1-Fachen von demjenigen der ersten Kapazität (C1) liegt.

2. Karte nach Anspruch 1, wobei der mindestens eine erste Teil (X1) ein erstes Muster auf der Außenfläche (31) des kapazitiven Sensors (30) bildet und der mindestens eine zweite Teil (X2) ein zweites Muster auf der Außenfläche (31) des kapazitiven Sensors (30) bildet.

3. Karte nach den Ansprüchen 1 und 2, wobei der erste Teil (X1) und der zweite Teil (X2) eine raue Außenfläche (41) der Beschichtung (40) bilden.

4. Karte nach einem der Ansprüche 1 bis 3, wobei die Beschichtung (40) mindestens einen dritten Teil (X3) aufweist, der auf den mindestens einen ersten Teil (X1) und den mindestens einen zweiten Teil (X2) aufgebracht ist, wobei der mindestens eine dritte Teil (X3) aus einem dritten Material (M3) mit einem dritten dielektrischen Wert (ε3) besteht, wobei der mindestens eine dritte Teil (X3) eine dritte Dicke (d3) auf dem mindestens einen ersten Teil (X1) und eine vierte Dicke (d3') auf dem mindestens einen zweiten Teil (X2) aufweist, wobei der mit dem mindestens einen dritten Teil (X3) bedeckte empfindliche Film (35) dafür ausgelegt ist, mit dem auf den mindestens einen dritten Teil (X3), der den mindestens einen ersten Teil (X1) beschichtet, aufgedrückten Finger des Benutzers einen Kondensator mit einer dritten Kapazität (C3) zu bilden, und mit dem auf den mindestens einen dritten Teil (X3), der den mindestens einen zweiten Teil (X2) beschichtet, einen Kondensator mit einer vierten Kapazität (C3'), wobei die vierte Kapazität (C3') einen Wert hat, der zwischen dem 0,9- und dem 1,1-Fachen von demjenigen der dritten Kapazität (C3) liegt.

**5.** Karte nach Anspruch 4, wobei der dritte Teil (X3) eine glatte Außenfläche (41) der Beschichtung (40) bildet.

**6.** Karte nach einem der Ansprüche 1 bis 5, wobei der kapazitive Sensor (30) mindestens eine erste Vertiefung (Y1) aufweist, die in eine Dicke des dielektrischen Films (36) des kapazitiven Sensors (30) eingearbeitet ist, wobei die mindestens eine erste Vertiefung (Y1) dafür ausgelegt ist, die erste Dicke (d1) des mindestens eines ersten Teils (X1) wenigstens teilweise aufzunehmen.

**7.** Karte nach einem der Ansprüche 1 bis 6, wobei der kapazitive Sensor (30) mindestens eine zweite Vertiefung (Y2) aufweist, die in eine Dicke des dielektrischen Films (36) des kapazitiven Sensors (30) eingearbeitet ist, wobei die mindestens eine zweite Vertiefung (Y2) dafür ausgelegt ist, die zweite Dicke (d2) des mindestens eines zweiten Teils (X2) wenigstens teilweise aufzunehmen.

**Claims**

**1.** Biometric sensor card (10) comprising an inlay (20) and a capacitive fingerprint sensor (30) embedded in said inlay (20), said capacitive sensor (30) being configured to acquire a fingerprint of a finger of a user of said card (10), said capacitive sensor (30) comprising a sensing film (35) and a dielectric film (36), said dielectric film (36) covering the sensing film (35) and defining an external surface (31) of said capacitive sensor (30), said sensing film (35) being configured to form a capacitor with the finger of the user, said card (10) being **characterized in that** it comprises a coating (40) covering at least the external surface (31) of the capacitive sensor (30), said coating (40) comprising at least one first portion (X1) made of a first material (M1) of a first dielectric constant ($\varepsilon$1) and having a first thickness (d1), said sensing film (35) covered with said at least one first portion (X1) being configured to form a capacitor of a first capacitance (C1) with the finger of the user applied to this at least one first portion (X1), said coating (40) comprising at least one second portion (X2) made of a second material (M2) of a second dielectric constant ($\varepsilon$2) and having a second thickness (d2), said sensing film (35) covered with said at least one second portion (X2) being configured to form a capacitor of a second capacitance (C2) with the finger of the user applied to this at least one second portion (X2), said second capacitance (C2) having a value between 0.9 and 1.1 times the value of the first capacitance (C1).

**2.** Card according to Claim 1, wherein said at least one first portion (X1) forms a first pattern on the external surface (31) of the capacitive sensor (30) and said at least one second portion (X2) forms a second pattern on the external surface (31) of the capacitive sensor (30).

**3.** Card according to Claims 1 to 2, wherein the first portion (X1) and the second portion (X2) form a roughened external surface (41) of the coating (40).

**4.** Card according to any of Claims 1 to 3, wherein said coating (40) comprises at least one third portion (X3) deposited on said at least one first portion (X1) and at least one second portion (X2), said at least one third portion (X3) being made of a third material (M3) of a third dielectric constant ($\varepsilon$3), said at least one third portion (X3) having a third thickness (d3) on said at least one first portion (X1) and a fourth thickness (d3') on said at least one second portion (X2), the sensing film (35) covered with the at least one third portion (X3) being configured to form a capacitor having a third capacitance (C3) with the finger of the user applied to the at least one third portion (X3) coating the at least one first portion (X1) and a capacitor having a fourth capacitance (C3') with the finger of the user applied to the at least one third portion (X3) coating the at least one second portion (X2), said fourth capacitance (C3') having a value between 0.9 and 1.1 times the value of the third capacitance (C3).

**5.** Card according to Claim 4, wherein the third portion (X3) forms a smooth external surface (41) of the coating (40).

**6.** Card according to any of Claims 1 to 5, wherein said capacitive sensor (30) comprises at least one first indentation (Y1) hollowed out in a thickness of the dielectric film (36) of said capacitive sensor (30), said at least one first indentation (Y1) being configured to at least partially accommodate said first thickness (d1) of the at least one first portion (X1).

**7.** Card according to any of Claims 1 to 6, wherein said capacitive sensor (30) comprises at least one second indentation (Y2) hollowed out in a thickness of the dielectric film (36) of said capacitive sensor (30), said at least one second indentation (Y2) being configured to at least partially accommodate said second thickness (d2) of the at least one second portion (X2).

[Fig. 1]

FIG. 1

[Fig. 2]

FIG. 2

[Fig. 3]

EP 4 390 880 B1

FIG. 3

[Fig. 4]

FIG. 4

10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8787631 B2
- US 2006119369 A1
- US 2018300521 A1